# EUROPÄISCHE PATENTANMELDUNG

(11) **EP 1 900 991 A2**
(43) Veröffentlichungstag der Anmeldung: **19.03.2008**
(21) Anmeldenummer: 07016513.9
(22) Anmeldetag: 23.08.2007
(51) Int. Cl.: F16L 37/084, F16L 37/088

(54) **Fluidleitung**

(30) Priorität: 15.09.2006 DE 102006043461
(71) Anmelder: NORMA Germany GmbH, 63477 Maintal (DE)
(72) Erfinder: Kertesz, Janos, 65719 Hofheim (DE); Chateau, Jerome, 57070 Metz (FR); Wickel, Uwe, 34637 Schrecksbach (DE)
(74) Vertreter: Knoblauch, Andreas

(57) **Zusammenfassung**

Die Erfindung bezieht sich auf eine Fluidleitung (1), die Kunststoff und einen ersten Endabschnitt aufweist, der mit einem abschnittweise gewellten Hauptteil (6) der Fluidleitung (1) verbunden ist und eine Dichtungsring-Aufnahmenut (17) und eine erste Halterippe (15) zum Hintergreifen eines ersten Rastvorsprungs (16) eines Verbindungsrings (3) aufweist, der mit einem zweiten Rastvorsprung (24) zum Hintergreifen einer zweiten Halterippe (19) auf einem zweiten Endabschnitt (18) eines Rohres (2) versehen ist, in den der erste Endabschnitt, zum Verbinden der Fluidleitung mit dem Rohr (2) mittels des Verbindungsrings (3), einführbar ist. Um die Fluidleitung flexibler und weniger materialaufwendig auszubilden, ist dafür gesorgt, daß der erste Endabschnitt einen an den Hauptteil (6) der Fluidleitung (1) angrenzenden, weitgehend konischen Anfangsabschnitt (9) mit einem in Richtung zu dem nicht mit dem Hauptteil (6) verbundenen freien Ende des ersten Endabschnitts bis wenigstens über den größten Wellendurchmesser des Hauptteils (6) hinaus zunehmenden Außendurchmesser aufweist, daß sich an den Anfangsabschnitt (9) ein Zwischenabschnitt (10) anschließt, dessen Außendurchmesser von dem größten Durchmesser des Anfangsabschnitts (9) bis auf den kleinsten Durchmesser einer dem Eingriff des ersten Rastvorsprungs (16) dienenden Rastnut (11) abnimmt, und daß die Wand des ersten Endabschnitts steifer als die gesamte Wand des Hauptteils (6) der Fluidleitung (1) ist.

## Beschreibung

Die Erfindung bezieht sich auf eine Fluidleitung, die thermoplastischen Kunststoff und wenigstens einen ersten Endabschnitt aufweist, der einstückig mit einem zumindest abschnittweise gewellten Hauptteil der Fluidleitung geformt ist und wenigstens eine außen umlaufende Dichtungsring-Aufnahmenut und eine erste Halterippe zum Hintergreifen wenigstens eines ersten Rastvorsprungs eines Verbindungsrings aufweist, der mit wenigstens einem zweiten Rastvorsprung zum Hintergreifen einer zweiten Halterippe auf einem zweiten Endabschnitt eines Rohres versehen ist, in den der erste Endabschnitt, zum Verbinden der Fluidleitung mit dem Rohr mittels des Verbindungsrings, einführbar ist.

Eine derartige Fluidleitung ist aus der EP 1378701 A1 bekannt. Sie wird hauptsächlich in Kraftfahrzeugen, z.B. als Kraftstoff- oder Wasserleitung, verwendet.

Die Herstellung der Fluidleitung erfolgt in der Regel durch Extrusions-Blasformen in einem Korrugator. Durch die Wellung soll eine größere Flexibilität der Fluidleitung erreicht werden, um sie den beengten Platzverhältnissen im Kraftfahrzeug durch Verbiegen anzupassen. Der erste Endabschnitt muß jedoch eine hohe Biegesteifigkeit aufweisen, um die Verbindung der Fluidleitung mit dem Rohr, z.B. einem Rohrstutzen, belastbar und dicht zu halten. Bei der bekannten Fluidleitung wird daher die Wand des ersten Endabschnitts entsprechend dick ausgebildet. Gleichzeitig wird auch die Wand des an den ersten Endabschnitt angrenzenden Hauptteils der Fluidleitung zumindest in ungewellten Abschnitten ebenso dick ausgebildet wie der erste Endabschnitt. Die Wand der Wellungen in den gewellten Abschnitten des Hauptteils wird dagegen beim Blasformen nur geringfügig verringert. Die Fluidleitung ist daher trotz der Wellungen, insbesondere wenn sie nur in einigen Abschnitten gewellt ist, weiterhin biegesteifer als erwünscht und entsprechend materialaufwendig.

Der Erfindung liegt daher die Aufgabe zugrunde, eine Fluidleitung der geschilderten Art anzugeben, die flexibler und weniger materialaufwendig ist.

Erfindungsgemäß ist diese Aufgabe dadurch gelöst, daß der erste Endabschnitt einen an den Hauptteil der Fluidleitung angrenzenden, weitgehend konischen Anfangsabschnitt mit einem in Richtung zu dem nicht mit dem Hauptteil verbundenen freien Ende des ersten Endabschnitts bis wenigstens über den größten Wellendurchmesser des Hauptteils hinaus zunehmenden Außendurchmesser aufweist, daß sich an den Anfangsabschnitt ein Zwischenabschnitt anschließt, dessen Außendurchmesser von dem größten Durchmesser des Anfangsabschnitts bis auf den kleinsten Durchmesser einer dem Eingriff des ersten Rastvorsprungs dienenden Rastnut abnimmt, und daß die Wand des ersten Endabschnitts steifer als die gesamte Wand des Hauptteils der Fluidleitung ist.

Durch die weitgehend konische Form des Anfangsabschnitts des ersten Endabschnitts kann erreicht werden, daß allzu große Außendurchmesserstufen im ersten Endabschnitt und im Verbindungsring vermeidbar sind, da die Endabschnitte ineinander gesteckt werden und der Verbindungsring beide Endabschnitte übergreifen muß. Desgleichen können Außendurchmesserstufen im Anfangsabschnitt vermieden werden, um die Außendurchmesser der beiden Halterippen weitgehend gleich und damit auch den Außendurchmessern des Verbindungsrings möglichst stufenlos auszubilden. Darüber hinaus hat die stufenlose Form des konischen Anfangsabschnitts den Vorteil, daß er im Vergleich zu einer abgestuften Form weniger Material erfordert und sich seine Wandstärke beim Blas-oder Vakuumformen im Bereich einer etwaigen größeren Durchmesserstufe durch die dabei auftretende Dehnung des Kunststoffs und damit auch seine Steifigkeit nicht verringert.

Die größere Steifigkeit des ersten Endabschnitts als die des Hauptteils der Fluidleitung kann dadurch erreicht werden, daß die Wandstärke des ersten Endabschnitts wenigstens das Zweifache der Wandstärke des Hauptteils der Fluidleitung beträgt.

Entsprechend kann die Wand des Hauptteils der Fluidleitung dünner und damit flexibler und, auf die Länge bezogen, materialsparender als der erste Endabschnitt ausgebildet sein. So kann die Wandstärke des ersten Endabschnitts etwa 1,5 bis 3 mm und die des Hauptteils der Fluidleitung etwa 0,3 bis 1,4 mm betragen.

Die größere Wandstärke des ersten Endabschnitts kann dadurch erreicht werden, daß beim Extrusions-Blas- oder Vakuumformen mittels Korrugator die Umlaufgeschwindigkeit des Korrugators im Vergleich zur Vorschubgeschwindigkeit des geschmolzenen Kunststoffs während der Formung des ersten Endabschnitts verringert werden.

Alternativ oder zusätzlich kann dafür gesorgt sein, daß der erste Endabschnitt wenigstens eines der Verstärkungsmaterialien aus der Gruppe der Glasfasern, Mineralfasern, Metallfasern und Glaskugeln aufweist.

Vorzugsweise ist der erste Endabschnitt mit wenigstens einem Zahn für den Eingriff zwischen Zähnen des Verbindungsrings versehen. Dies ermöglicht es, den Verbindungsring und den ersten Endabschnitt in einer solchen relativen Drehwinkellage, gegen Verdrehung gesichert, zu verbinden, in der sich ein aufweitbarer Verbindungsring leicht aufweiten läßt, um die Rastverbindung zu lösen.

Vorzugsweise ist ferner dafür gesorgt, daß die Dichtungsring-Aufnahmenut an ihrer radial inneren Seite einen Stützring aufweist. Dieser Stützring, der vorzugsweise Metall aufweist, trägt zusätzlich dazu bei, daß sich die Dichtungsring-Aufnahmenut nach Herstellung der Verbindung zwischen der Fluidleitung und dem Rohr nicht unter dem Druck des Dichtungsrings verformt, so daß die Verbindung dicht bleibt. Ferner kann er eine etwaige Unrundheit der Dichtungsring-Aufnahmenut ausgleichen.

Außerdem kann die Dichtungsring-Aufnahmenut auf ihrer radial inneren Seite eine Rippe aufweisen. Die Dichtring-Aufnahmenut ist dann wie eine Sicke in sich steifer.

Vorzugsweise ist dafür gesorgt, daß der Dichtungsring wenigstens eine Dichtlippe aufweist und aus elastomerem Material in die Dichtungsring-Aufnahmenut eingespritzt wurde. Ein derartiger Dichtungsring hat eine hohe Dichtfähigkeit und muß nicht separat montiert werden.

Die Erfindung und ihre Weiterbildungen werden nachstehend anhand der Zeichnungen von Ausführungsbeispielen näher beschrieben. Darin stellen dar:
- Fig. 1: einen Axialschnitt durch eine erfindungsgemäße Verbindungsanordnung mit einer erfindungsgemäßen Fluidleitung,
- Fig. 2: eine Seitenansicht der Verbindungsanordnung nach Fig. 1,
- Fig. 3: den gleichen Axialschnitt wie den in Fig. 1 dargestellten, jedoch ohne das Rohr, mit dem die Fluidleitung verbunden wird,
- Fig. 4: den Schnitt IV-IV der Fig. 3,
- Fig. 5: eine Seitenansicht der erfindungsgemäßen Fluidleitung,
- Fig. 6: eine Abwandlung der Verbindungsanordnung nach Fig. 1 im Axialschnitt,
- Fig. 7: den Schnitt VII-VII der Fig. 6,
- Fig. 8: eine Seitenansicht der Verbindungsanordnung nach Fig. 6, jedoch ohne das Rohr, mit dem die Fluidleitung verbunden wird,
- Fig. 9: eine Seitenansicht der Fluidleitung der Verbindungsanordnung nach Fig. 6,
- Fig. 10: eine Seitenansicht eines Verbindungsrings der Verbindungsanordnung nach Fig. 6,
- Fig. 11: den Schnitt XI-XI der Fig. 10,
- Fig. 12: den Schnitt XII-XII der Fig. 10 und
- Fig. 13: eine perspektivische Ansicht des Verbindungsrings der Verbindungsanordnung nach Fig. 6.

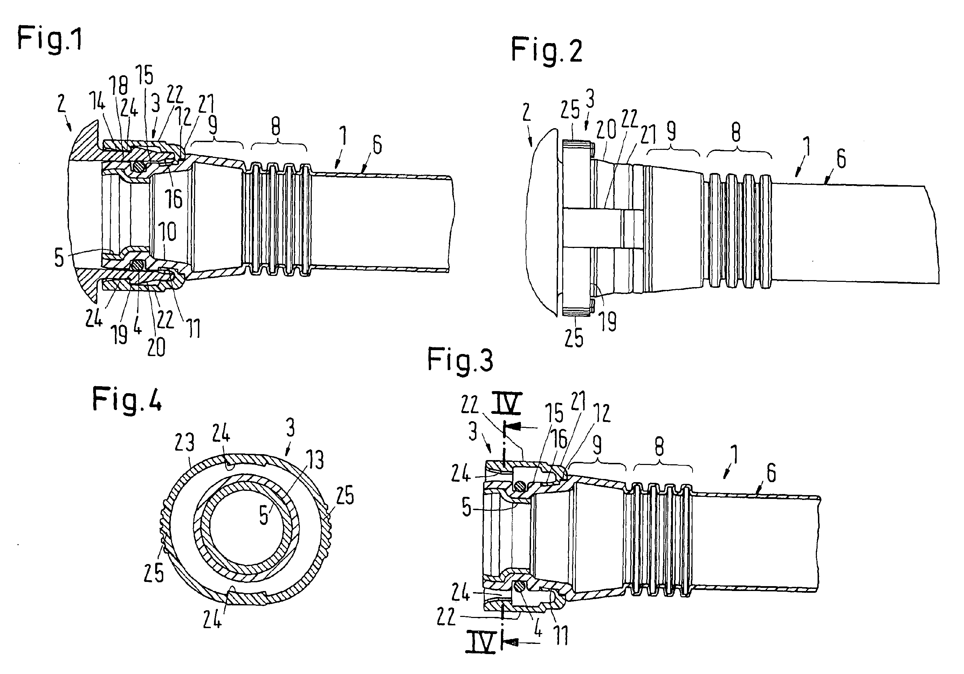

Die Verbindungsanordnung nach Fig. 1 besteht aus einer Fluidleitung, einem Rohr 2, einem Verbindungsring 3, einem Dichtungsring 4 und einem Stützring 5. Während die Teile 1 bis 3 thermoplastischen Kunststoff aufweisen und der Dichtungsring 4 ein Elastomer oder Gummi aufweist, besteht der Stützring 5 vorzugsweise aus Metall, er kann aber auch Kunststoff, insbesondere harten oder verstärkten Kunststoff, aufweisen.

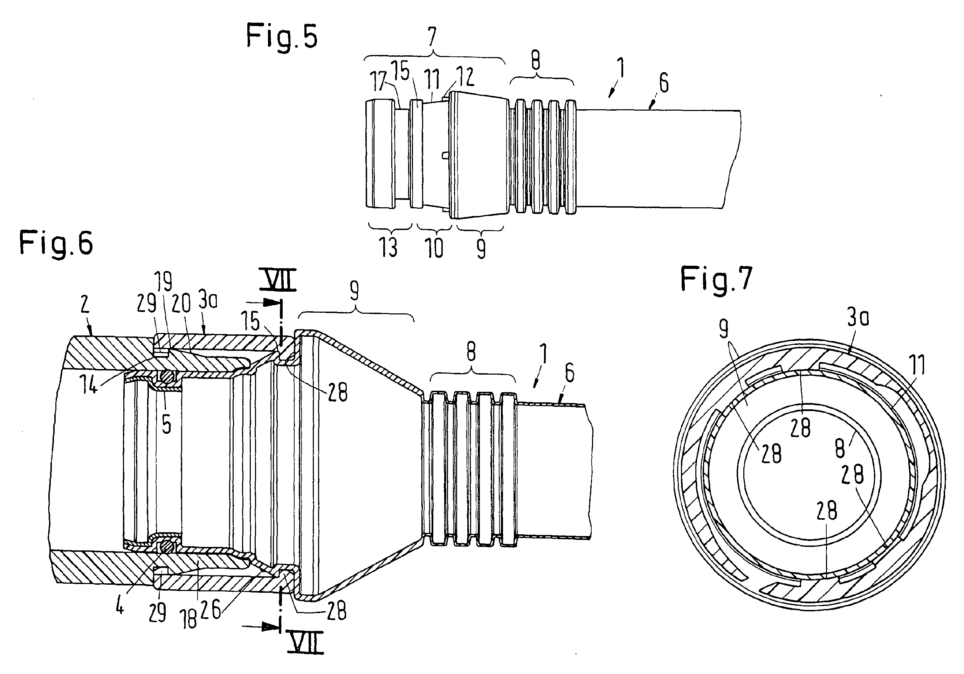

Die Fluidleitung wird in Kraftfahrzeugen, z.B. als Kraftstoff- oder Kühlwasserleitung, verwendet. Sie besteht aus einem Hauptteil 6 und einem Endabschnitt 7 (Fig. 5). Der Hauptteil 6 hat wenigstens einen gewellten Abschnitt 8, um die Flexibilität (Biegsamkeit) des Hauptteils 6 zu erhöhen, damit die Fluidleitung 1 zur Anpassung an beengte Raumverhältnisse im Kraftfahrzeug zumindest in dem oder den gewellten Endabschnitt(en) 8 leichter gebogen werden kann.

An den dargestellten gewellten Abschnitt 8 schließt sich der Endabschnitt 7 an. Der Endabschnitt 7 hat einen weitgehend konischen Anfangsabschnitt 9, der an den gewellten Abschnitt 8 angrenzt, einen Zwischenabschnitt 10 (Fig. 5), der sich an den Anfangsabschnitt 9 anschließt und außen eine umlaufende Rastnut 11 mit Zähnen 12 für den Eingriff eines am einen axialen Ende des Verbindungsrings 3 innen umlaufenden Rastvorsprungs 16 mit entsprechenden Zähnen und eine Halterippe 15 aufweist. An den Zwischenabschnitt 10 schließt sich ein frei endender Abschnitt 13 (Fig. 5) an, der außen eine Nut 17 zur Aufnahme des Dichtungsrings 4 aufweist. Die Dichtungsring-Aufnahmenut 17 bildet auf ihrer radial inneren Seite eine Rippe, so daß die Dichtungsring-Aufnahmenut 17 wie eine Sicke in sich steifer ist.

An der Innenseite der Dichtring-Aufnahmenut 17 liegt der Stützring 5 an. Er weist Metall auf, kann aber auch harten Kunststoff aufweisen. Er versteift nicht nur Dichtring-Aufnahmenut 17, sondern kann auch eine etwaige beim Formen aufgetretene Unrundheit dieser Nut ausgleichen.

Die Fluidleitung 1 wird durch Extrusions-Blas- oder Vakuumformen mittels eines Korrugators hergestellt. Dabei wird die Umlaufgeschwindigkeit des Korrugators beim Formen des Endabschnitts 7 relativ zur Vorschubgeschwindigkeit der aus dem Extruder austretenden, erweichten Kunststoffmasse verringert, so daß sich die Kunststoffmasse im Bereich des Endabschnitts 7 staut und die Wand des Endabschnitts 7 wenigstens doppelt so dick wie die des Hauptteils 6 wird. Vorzugsweise liegt die Wandstärke des Hauptteils 6 bei etwa 0,3 bis 1,4 mm und die des Endabschnitts 7 bei etwa 1,5 bis 3,5 mm. Der Endabschnitt 7 ist daher erheblich steifer als der Hauptteil 6 der Fluidleitung 1, so daß der Endabschnitt 7 einer höheren Belastung standhält. Zusätzlich oder alternativ zur dickeren Ausbildung des Endabschnitts 7 kann er wenigstens eines der Verstärkungsmaterialien aus der Gruppe der Glasfasern, Mineralfasern, Metallfasern oder Glaskugeln aufweisen.

Der Durchmesser des Anfangsabschnitts 9 nimmt von dem Hauptteil 6 zum freien Ende des Endabschnitts 7 hin bis wenigstens über den größten Wellendurchmesser des Hauptteils 6 hinaus zu.

Das Rohr 2 hat einen Endabschnitt 18 (Fig. 1) mit einer eine Rastnut 14 begrenzenden, umlaufenden Halterippe 19, die eine schräge Flanke 20 als Auflaufschräge aufweist. Das Rohr 2 kann gleichzeitig einen Teil der Außenwand eines Gehäuses, z.B. des Kühlers eines Verbrennungsmotors im Kraftfahrzeug, und der Endabschnitt 18 einen Rohrstutzen an dem Gehäuse bilden.

Der Verbindungsring 3 hat an seinem einen axialen Ende einen kreisrunden geschlossenen Ring 21. Der Ring 21 ist innen mit dem Rastvorsprung 16 für den Eingriff in die Rastnut 11 und mit Zähnen für den Eingriff zwischen den Zähnen 12 versehen. Der Rastvorsprung 16 ist elastisch aufweitbar und innen konisch, so daß er über die Halterippe 15 hinweggeschoben werden kann, bis er in die Rastnut 11 einrastet.

Der Ring 21 des Verbindungsrings 3 ist ferner durch zwei sich diametral gegenüberliegende, federnde Stege 22 mit einem ovalen Ring 23 am anderen axialen Ende des Verbindungsrings 3 verbunden. Der Ring 23 hat innen sich diametral gegenüberliegende Rastvorsprünge 24 zum Hintergreifen der Halterippe 19 des Endabschnitts 18, um die Fluidleitung 1 mit dem Rohr 2 durch Einführung des mit dem Verbindungsring 3 verrasteten Endabschnitts 7 in den Endabschnitt 18 zu verbinden.

Die Verbindung der Fluidleitung 1 und des Rohres 2 kann dadurch getrennt werden, daß der Ring 23 am Ende des Verbindungsrings 3 im Bereich seiner Rastvorsprünge 24 durch Ausübung eines Drucks auf die einen kleineren Krümmungsradius aufweisenden, geriffelten Bögen 25 des Rings 3 so weit aufgeweitet wird, bis die Rastvorsprünge 24 mit der Halterippe 19 des Endabschnitts 18 außer Eingriff gelangt sind.

Die Verzahnung der Zähne 12 mit denen des Rings 21 bildet eine Verdrehsicherung des Verbindungsrings 3 auf dem Endabschnitt 7 und ermöglicht die Wahl einer relativen Drehwinkelstellung zwischen dem Verbindungsring 3 und dem Endabschnitt 7, in der die Bögen 25 des Rings 29 leicht manuell zugänglich sind, um die Verbindung zu trennen.

Durch die weitgehend konische Form des Anfangsabschnitts 9 kann erreicht werden, daß allzu große Außendurchmesserstufen im ersten Endabschnitt 7 und im Verbindungsring 3 vermeidbar sind, da die Endabschnitte 7 und 18 ineinander gesteckt werden und der Verbindungsring 3 beide Endabschnitte 7, 18 übergreifen muß. Desgleichen können Außendurchmesserstufen im Anfangsabschnitt 9 vermieden werden, um die Außendurchmesser der beiden Halterippen 15 und 19 weitgehend gleich und damit auch den Außendurchmesser des Verbindungsrings 3 möglichst stufenlos oder allenfalls flach abgestuft auszubilden. Darüber hinaus hat die stufenlose Form des konischen Anfangsabschnitts 9 den Vorteil, daß er im Vergleich zu einer abgestuften Form weniger Material erfordert und sich seine Wandstärke beim Blas- oder Vakuumformen im Bereich einer etwaigen größeren Durchmesserstufe durch die dabei auftretende Dehnung des Kunststoffs und damit auch seine Steifigkeit nicht verringert.

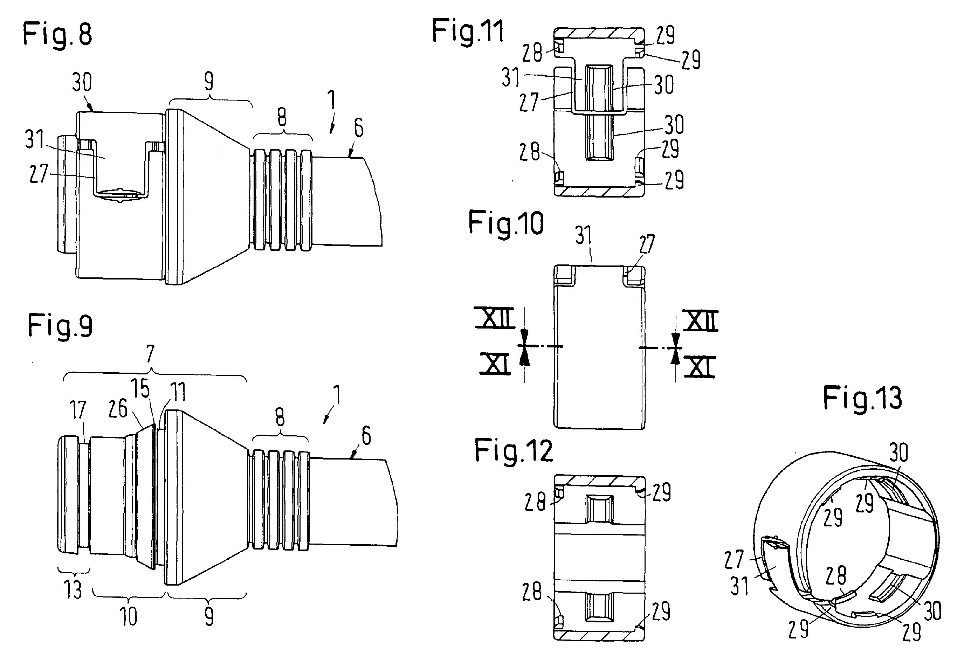

Die in den Fig. 6 bis 13 dargestellte Abwandlung der Verbindungsanordnung unterscheidet sich von der nach den Fig. 1 bis 5 im wesentlichen nur in der Ausbildung des Verbindungsrings 3a, weshalb die einander entsprechenden Teile beider Verbindungsanordnungen mit gleichen Bezugszahlen versehen sind.

Die Fluidleitung 1 nach den Fig. 6 bis 9 unterscheidet sich von der Fluidleitung nach den Fig. 1 bis 5 prinzipiell nur dadurch, daß die Halterippe 15 mit einer Auflaufschräge 26 für den Verbindungsring 3a versehen ist.

Der Verbindungsring 3a ist ein Federring und nicht rundum geschlossen, sondern mit einem von seinem einen axialen Ende zum anderen durchgehenden Schlitz 27 für den Eingriff einer Spreizzange versehen, um den Verbindungsring 3a zum Trennen der Verbindung der Fluidleitung 1 und des Rohres 2 aufzuweiten. Er hat an seinen axialen Enden keine umlaufenden, sondern getrennte Rastvorsprünge 28 bzw. 29, wobei die Rastvorsprünge 28 gegenüber den Rastvorsprüngen 29 in Umfangsrichtung versetzt sind, so daß die Zwischenräume der Rastvorsprünge 28 mit der Lage der Rastvorsprünge 29 zusammenfallen, und umgekehrt, um den Verbindungsring 3a bei der Herstellung aus Kunststoff ungehindert aus dem Formwerkzeug entfernen zu können.

In der axialen Mitte ist der Verbindungsring 3a mit sich in Umfangsrichtung erstreckenden Versteifungsrippen 30 versehen.

Alternativ kann der Verbindungsring 3a auch aus Metall, vorzugsweise Federstahl, bestehen. Dann entfallen die Versteifungsrippen 30.

An dem einen Rand des Schlitzes 27 ist der Verbindungsring 3a mit einer sich in Umfangsrichtung des Verbindungsrings 3a erstreckenden Lasche 31 versehen, die in eine U-förmige Ausnehmung am gegenüberliegenden Rand des Schlitzes 27 eingreift. Dadurch wird verhindert, daß sich die den Schlitz 27 begrenzenden Umfangsenden des Verbindungsrings 3a beim Zusammenstecken der Endabschnitte 7 und 8 nicht axial relativ zueinander verschieben, um ein zuverlässiges Hintergreifen der Halterippen 15, 19 durch die jeweiligen Rastvorsprünge 28, 29 zu gewährleisten.

Das Spreizwerkzeug zum Öffnen des Verbindungsrings 3a, um die Rastvorsprünge 28, 29 mit den Halterippen 15, 19 zum Trennen der Verbindung außer Eingriff zu bringen, wird zwischen dem freien Ende der Lasche 31 und dem gegenüberliegenden Rand des Schlitzes 27 eingesetzt.

Die Rastnut 11 im Zwischenabschnitt 10 der Fluidleitung 1 der Abwandlung nach den Fig. 6 bis 9 kann zu dem gleichen Zweck wie die Fluidleitung nach Fig. 5 mit Zähnen versehen sein, die zwischen die Rastvorsprünge 28 ähnlich wie zwischen Zähnen eingreifen.

Statt des als Dichtungsring 4 dargestellten O-Rings kann ein Dichtungsring vorgesehen sein, der wenigstens eine Dichtlippe aufweist und aus elastomerem Material in die Dichtungsring-Aufnahmenut 17 eingespritzt wurde. Ein derartiger Dichtungsring hat eine hohe Dichtfähigkeit und muß nicht separat montiert werden.

Die Fluidleitung 1 kann bei beiden Ausführungsbeispielen an beiden Enden mit einem Endabschnitt wie dem Endabschnitt 7 versehen sein.

## Patentansprüche

1. Fluidleitung (1), die thermoplastischen Kunststoff und wenigstens einen ersten Endabschnitt (7) aufweist, der einstückig mit einem zumindest abschnittweise gewellten Hauptteil (6) der Fluidleitung (1) geformt ist und wenigstens eine außen umlaufende Dichtungsring-Aufnahmenut (17) und eine erste Halterippe (15) zum Hintergreifen wenigstens eines ersten Rastvorsprungs (16; 28) eines Verbindungsrings (3; 3a) aufweist, der mit wenigstens einem zweiten Rastvorsprung (24; 29) zum Hintergreifen einer zweiten Halterippe (19) auf einem zweiten Endabschnitt (18) eines Rohres (2) versehen ist, in den der erste Endabschnitt (7), zum Verbinden der Fluidleitung (1) mit dem Rohr (2) mittels des Verbindungsrings (3, 3a), einführbar ist, **dadurch gekennzeichnet, daß** der erste Endabschnitt (7) einen an den Hauptteil (6) der Fluidleitung (1) angrenzenden, weitgehend konischen Anfangsabschnitt (9) mit einem in Richtung zu dem nicht mit dem Hauptteil (6) verbundenen freien Ende des ersten Endabschnitts (7) bis wenigstens über den größten Wellendurchmesser des Hauptteils (6) hinaus zunehmenden Außendurchmesser aufweist, daß sich an den Anfangsabschnitt (9) ein Zwischenabschnitt (10) anschließt, dessen Außendurchmesser von dem größten Durchmesser des Anfangsabschnitts (9) bis auf den kleinsten Durchmesser einer dem Eingriff des ersten Rastvorsprungs (16) dienenden Rastnut (11) abnimmt, und daß die Wand des ersten Endabschnitts (7) steifer als die gesamte Wand des Hauptteils (6) der Fluidleitung (1) ist.

2. Fluidleitung nach Anspruch 1, **dadurch gekennzeichnet, daß** die Wandstärke des ersten Endabschnitts (7) wenigstens das Zweifache der Wandstärke des Hauptteils (6) der Fluidleitung (1) beträgt.

3. Fluidleitung nach Anspruch 1 oder 2, **dadurch gekennzeichnet, daß** der erste Endabschnitt (7) wenigstens eines der Verstärkungsmaterialien aus der Gruppe der Glasfasern, Mineralfasern, Metallfasern und Glaskugeln aufweist.

4. Fluidleitung nach einem der Ansprüche 1 bis 3, **dadurch gekennzeichnet, daß** der erste Endabschnitt (7) mit wenigstens einem Zahn (12) für den Eingriff zwischen Zähnen des Verbindungsrings (3; 3a) versehen ist.

5. Fluidleitung nach einem der Ansprüche 1 bis 4, **dadurch gekennzeichnet, daß** die Dichtungsring-Aufnahmenut (17) an ihrer radial inneren Seite einen Stützring (5) aufweist.

6. Fluidleitung nach Anspruch 5, **dadurch gekennzeichnet, daß** der Stützring (5) Metall aufweist.

7. Fluidleitung nach einem der Ansprüche 1 bis 6, **dadurch gekennzeichnet, daß** die Dichtungsring-Aufnahmenut (17) auf ihrer radial inneren Seite eine Rippe bildet.

8. Fluidleitung nach einem der Ansprüche 1 bis 7, **dadurch gekennzeichnet, daß** der Dichtungsring wenigstens eine Dichtlippe aufweist und aus elastomerem Material in die Dichtungsring-Aufnahmenut (17) eingespritzt wurde.

9. Verbindungsanordnung aus einer Fluidleitung (1), einem Rohr (2), einem Verbindungsring (3; 3a) und einem Dichtungsring (4) jeweils nach einem der Ansprüche 1 bis 4 oder mit einem Stützring (5) nach einem der Ansprüche 1 bis 8.
